# EUROPÄISCHE PATENTSCHRIFT

(11) **EP 3 670 808 B1**
(45) Veröffentlichungstag und Bekanntmachung des Hinweises auf die Patenterteilung: **22.12.2021**
(21) Anmeldenummer: 19210510.4
(22) Anmeldetag: 21.11.2019
(51) Int. Cl.: E06B 3/263, B29C 70/52, E06B 3/30, E06B 3/22, E06B 1/30

(54) **RAHMEN-BAUGRUPPE FÜR EINE TÜR ODER EIN FENSTER**
FRAME ASSEMBLY FOR A DOOR OR WINDOW
MODULE DE CADRE POUR UNE PORTE OU UNE FENÊTRE

(30) Priorität: 20.12.2018 DE 202018107339 U
(43) Veröffentlichungstag der Anmeldung: 24.06.2020
(73) Patentinhaber: REHAU AG + Co, 95111 Rehau (DE)
(72) Erfinder: Al-Sheyyab, Ahmad, 95111 Rehau (DE); Gerber, Nils, 95111 Rehau (DE); Gorbunov, Igor, 91301 Forchheim (DE); Schubert, Erik, 91315 Höchstadt (DE); Sell, Stephan, 39126 Magdeburg (DE)

(56) Entgegenhaltungen:
- EP-A1- 0 233 171
- EP-A1- 3 119 972
- DE-A1-102015 102 850

## Beschreibung

Die Erfindung betrifft eine Rahmen-Baugruppe für eine Tür oder ein Fenster mit
- mindestens einem, zumindest ein flächiges Füllungselement, vorzugsweise mindestens eine Glasscheibe einfassenden, umlaufenden Flügelrahmenprofil und
- einem im geschlossenen Zustand das Flügelrahmenprofil einfassenden, ebenfalls umlaufenden Blendrahmenprofil,
- wobei die Rahmenprofile vorzugsweise faserverstärkten Kunststoff enthalten.

Eine solche Rahmen-Baugruppe ist beispielsweise aus der EP 2 191 090 B1 bekannt. Faserverstärkte, zum Beispiel mit Glas- und/oder Carbon- und/oder Basalt- und/oder Aramidfasern verstärkte Kunststoffprofile zeichnen sich durch eine hohe mechanische Belastbarkeit aus. Dies führt in vielen Anwendungsfällen dazu, dass auf die sonst übliche StahlArmierung, welche in eine Hohlkammer des entsprechenden Profils eingeschoben wird, verzichtet werden kann. Im Ergebnis weisen daher die faserverstärkten Kunststoffprofile häufig bessere Wärmedämmeigenschaften auf als Profile mit Stahlarmierung. Die aus faserverstärkten Kunststoff hergestellten Profile finden häufig Anwendung bei großflächigen Fenstern oder Türen. In diesen Fällen sind jedoch die benötigten Meter an entsprechend hergestellten Extrusionsprofile vergleichsweise klein. Dies hat zur Folge, dass die Kosten für die entsprechenden Extrusionswerkzeuge relativ stark ins Gewicht fallen.

Aus der WO 2018/072878 ist ein Verfahren zur Herstellung von endlos faserverstärkten thermoplastischen Fenster-oder Tür-Hohlkammerprofilen mittels reaktiver Pultrusion bekannt. Hierbei wird die thermoplastische Matrix der Profile aus dünnflüssigen Monomeren hergestellt, die während der reaktiven Pultrusion polymerisiert werden. Auch bei derartigen Verfahren sind die Mengen an benötigten Laufmetern entsprechend hergestellter Profile vergleichsweise gering, sodass die Werkzeugkosten in der Kalkulation eine große Rolle spielen. Die EP 3 119 972 A1 zeigt bereichsweise faserverstärkte Fenster- bzw. Türprofile.

Eine Rahmenbaugruppe mit den Merkmalen des Oberbegriffs des Patentanspruchs 1 ist aus der EP 0 233 171 A1 sowie der DE 10 2015 102 850 A1 bekannt.

Der Erfindung liegt die Aufgabe zugrunde, eine gattungsgemäße Rahmen-Baugruppe anzugeben, welche sich auch bei geringer Produktionsmenge kostengünstig herstellen lässt.

Erfindungsgemäß wird diese Aufgabe durch die Merkmale des Patentanspruchs 1 gelöst. Die Erfindung beruht auf der Erkenntnis, dass insbesondere bei vergleichsweise kleinen Stückzahlen entsprechender Rahmen-Baugruppen die Gestaltung von zumindest substantiellen Bestandteilen sowohl des Flügelrahmenprofils als auch des Blendrahmenprofils mit identischem Querschnitt von Vorteil ist. Denn hiermit ist es möglich, die Bereitstellung zumindest eines Werkzeuges einzusparen, da die entsprechenden, vorzugsweise thermoplastischen Hohlkammerprofile (z.B. auf Basis von Polyamid, insbes. PA6) aufgrund ihres identischen Querschnittsprofils mit ein und demselben Werkzeug hergestellt werden können. Dies ist insbesondere dann von Vorteil, wenn das Querschnittsprofil dieser vorzugsweise faserverstärkten Hohlkammerprofile komplex und daher das entsprechende Werkzeug vergleichsweise teuer ist. Es wird daher im Rahmen der Erfindung in der Regel angestrebt, einen möglichst großen Bestandteil der regelmäßig aufgrund der geforderten Wärmedämmeigenschaften komplexen Geometrie der Rahmenprofile durch ein identisches Querschnittsprofil darzustellen. Im Rahmen der Erfindung liegt es daher insbesondere, dass die Hohlkammerprofile mit identischem Querschnittsprofil jeweils mehrere Hohlkammern aufweisen, die zweckmäßigerweise im eingebauten Zustand der Rahmen-Baugruppe horizontal nebeneinander liegen. Vorzugsweise erstrecken sich die Hohlkammerprofile jeweils über die gesamte Querschnittsbreite der Rahmenprofile. In diesem Falle bilden somit die Hohlkammerprofile mit identischem Querschnittsprofil jeweils zumindest einen Teil der Innen- und Außenoberfläche sowohl des Flügelrahmenprofils als auch des Blendrahmenprofils. Die erfindungsgemäße Rahmen-Baugruppe zeichnet sich ferner durch eine hohe mechanische Belastbarkeit (so dass in der Regel Metall- Armierungen entbehrlich sind), sehr gute Wärmedämmeigenschaften, ein niedriges Gewicht, einen geringen thermischen Ausdehnungskoeffizienten sowie eine geringe Verzugsneigung aus. Die erfindungsgemäße Lehre ist insbesondere für vergleichsweise schmale Rahmen-Baugruppen mit einer Rahmenbreite von höchstens 85 mm, insbesondere höchstens 80 mm geeignet. Zweckmäßigerweise beträgt der Gewichtsanteil der Verstärkungsfasern über den gesamten Querschnitt der Hohlkammerprofile gesehen mindestens 60 Gew.-%, vorzugsweise mindestens 70 Gew.-%.

Zweckmäßigerweise enthalten die Hohlkammerprofile endlos faserverstärkten Kunststoff, z.B. mit Glas- und/oder Carbon- und/oder Basalt- und/oder Aramidfasern faserverstärktem Kunststoff. Um derartige mit Endlosfasern verstärkte Rahmenprofile herzustellen, kann im Rahmen der Erfindung insbesondere eine Pultrusion zum Einsatz kommen, bei der z.B. die endlosen Faserstränge vor dem Eintritt in das Werkzeug in eine thermoplastische Kunststoffmatrix eingebettet und in diesem Zustand durch das Werkzeug hindurch gezogen und dabei zu einem Profil geformt werden. Im Rahmen der Erfindung liegt es jedoch auch, dass die Pultrusion als reaktive Pultrusion ausgebildet ist, bei der zweckmäßigerweise erst innerhalb des Werkzeugs entsprechende Monomere der Kunststoff-Matrix des fertigen Profils zugeführt und polymerisiert werden, so wie es beispielsweise in Ausführungsbeispiel der genannten WO 2018/072878 erläutert ist.

Im Rahmen der Erfindung liegt es, dass die Hohlkammerprofile einen faserverstärkten Kunststoff-Kern aufweisen, der mit einer Außenschicht versehen, vorzugsweise coextrudiert ist. Dies hat den Vorteil, dass trotz Faserverstärkung die erfindungsgemäße Rahmenbaugruppe eine optisch einwandfreie, glatte, eine geringe Verschmutzungsneigung aufweisende und daher auch leicht zu reinigende Oberfläche aufweist. Die Coextrusion erfolgt zweckmäßigerweise mit einem vorzugsweise thermoplastischen Kunststoff (z.B. Polyamid, insbes. PA6 oder PVC), der frei von Verstärkungsfasern ist. Im Rahmen der Erfindung liegt es, dass der Kunststoff der Außenschicht dem Kunststoff entspricht, aus dem auch die Hohlkammerprofile mit identischem Querschnittsprofil hergestellt werden. Andere Materialien für die Außenschicht werden hierdurch jedoch nicht ausgeschlossen. Insbesondere kann alternativ zur Coextrusion die Außenschicht auch mittels einer Pulverbeschichtung oder auch einer Lackierung mit einem flüssigen Lack aufgetragen sein. Zweckmäßigerweise umschließt die Außenschicht den faserverstärkten Kunststoff-Kern zu mehr als 90 %, vorzugsweise vollständig.

Erfindungsgemäß weist das Blendrahmenprofil zusätzlich mindestens ein Pfostenprofil auf, welches die vom umlaufenden Blendrahmenprofil aufgespannte Ebene unterteilt, wobei das Pfostenprofil ebenfalls zwei spiegelbildlich zueinander angeordnete Hohlkammerprofile mit identischem Querschnittsprofil aufweist. Erfindungsgemäß wird also zusätzlich auch ein substantieller Bestandteil des Pfostenprofils mittels desselben Werkzeugs hergestellt, welches bereits zur Herstellung der Hohlkammerprofile des Blendrahmens und des Flügelrahmens eingesetzt wird. Somit lassen sich komplexere, Pfostenprofile aufweisende Rahmen-Baugruppen in geringen Stückzahlen kostengünstig herstellen.

Zweckmäßigerweise ist an der Außenseite des Blendrahmenprofils mindestens eine metallische Vorsatzschale befestigt, die vorzugsweise aus Aluminium besteht. Diese Vorsatzschale schützt die Außenseite des Blendrahmenprofils gegen Witterungseinflüsse.

Die ein identisches Querschnittsprofil besitzenden Hohlkammerprofile können einen im Wesentlichen S-förmigen Querschnitt aufweisen. Zweckmäßigerweise dienen die Enden der S-Form beim Flügelrahmen an einer Seite als Anschlag für ein Flächenelement, zum Beispiel eine Glasscheibe, und an der anderen Seite z.B. als Anschlag am Blendrahmen. Beim Blendrahmen hingegen dienen die Enden der S-Form zweckmäßigerweise an einer Seite als Verankerungselement im Mauerwerk und an der anderen Seite z.B. als Anschlag am Flügelrahmen.

Vorzugsweise weisen die Hohlkammerprofile mit identischem Querschnittsprofil jeweils zumindest eine Ausnehmung mit einem Hinterschnitt zur Befestigung eines vorzugsweise eine Hohlkammer aufweisenden Zusatzprofils auf. Im Falle des Flügelrahmenprofils kann dieses Zusatzprofil beispielsweise die Funktion einer das innerste Flächenelement, zum Beispiel die innerste Glasscheibe einfassenden Glasleiste aufweisen. Beim Blendrahmenprofil hingegen kann dieses Zusatzprofil beispielsweise als Klemmleiste zur Befestigung der vorgenannten metallischen Vorsatzschale und/oder als zusätzliches Verankerungselement im Mauerwerk dienen. Das Zusatzprofil kann grundsätzlich aus Kunststoff oder aber auch als Metall, zum Beispiel Aluminium bestehen.

Zweckmäßigerweise sind die im Querschnitt identischen Hohlkammerprofile von Blendrahmen- und Flügelrahmenprofil im geschlossenen Zustand des Flügels um 180° gedreht zueinander angeordnet. Vom Blendrahmen her gesehen steht somit in diesem Fall das Hohlkammerprofil des Flügelrahmens sozusagen "auf dem Kopf" und umgekehrt.

Die erfindungsgemäße Rahmen-Baugruppe kommt insbesondere bei Fenstern oder Türen mit großen Abmessungen, beispielsweise einer Höhe von mindestens 1 m, insbesondere mindestens 1,5 m, z.B. mindestens 2 m und/oder einer Breite von mindestens 2 m, insbesondere mindestens 3 m, zum Beispiel mindestens 4 m zum Einsatz, die beispielsweise über eine Dreifachverglasung verfügen, so dass aufgrund der leichten Konstruktion der Rahmen-Baugruppe eine Kompensation des hohen Gewichts der Glasscheiben ermöglicht wird.

Im Folgenden wird die Erfindung anhand einer lediglich ein Ausführungsbeispiel darstellenden Zeichnung ausführlich erläutert. Es zeigen schematisch:
- Fig. 1: ausschnittsweise eine Rahmen-Baugruppe in einer Querschnittsdarstellung im geschlossenen Zustand.
- Fig.2: eine erfindungsgemäße Ausführungsform der Erfindung in einer der Figur 1 entsprechenden Darstellung mit im Flügelrahmenprofil eingefassten Glasscheiben,
- Fig.3: die Seitenansicht X auf die Rahmen-Baugruppe gemäß Fig. 1,
- Fig.4: die Seitenansicht Y auf die Rahmen-Baugruppe gemäß Fig. 2 und
- Fig.5: das in Fig. 4 gezeigte Pfostenprofil in einer Querschnittsdarstellung.

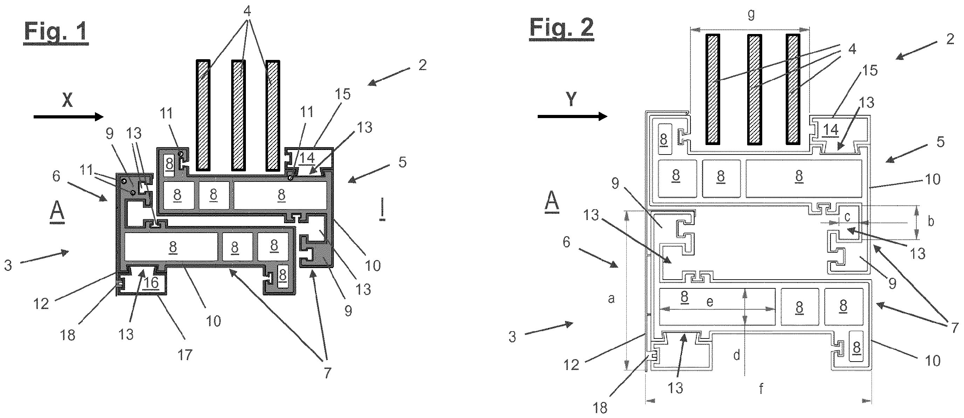

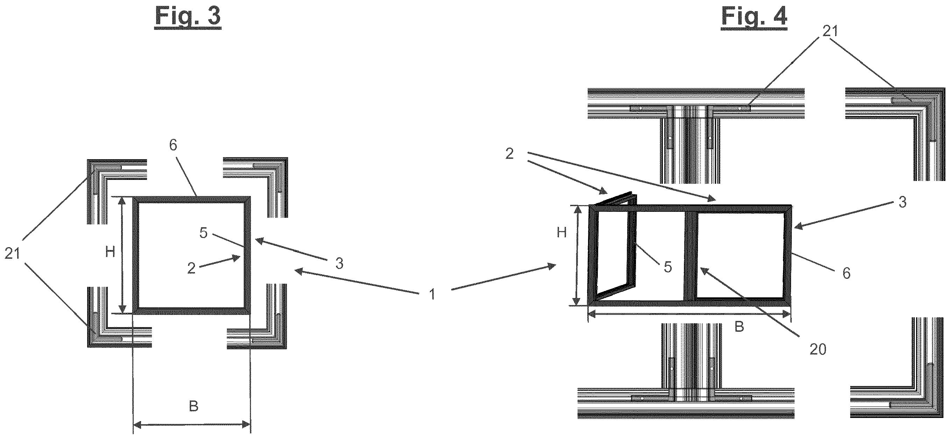

Die Figuren 1 bis 4 zeigen Rahmen-Baugruppen für ein Fenster 1 eines (nicht näher dargestellten) Gebäudes. Die gezeigten Fenster 1 umfassen jeweils mindestens einen Fensterflügel 2 (in Fig. 4 ist der linke Fensterflügel 2 nach innen geöffnet und der rechte Fensterflügel 2 - ebenso wie der Fensterflügel in Fig. 3 - geschlossen), der im geschlossenen Zustand des Fensterflügels 2 von einem Fensterrahmen 3 eingefasst ist. Der Fensterflügel 2 ist schwenk- und/oder kippbeweglich mit dem Fensterrahmen 3 verbunden (vergl. Figur 4). Der Fensterflügel 3 weist ein mehrere Glasscheiben 4 des Fensterflügels 3 einfassendes, umlaufendes Flügelrahmenprofil 5 auf. Der Fensterrahmen 3 umfasst ein ebenfalls umlaufendes Blendrahmenprofil 6, welches im in Figur 1 und 2 dargestellten geschlossenen Zustand des Fensterflügels 2 das Flügelrahmenprofil 5 einfasst. Das Flügelrahmenprofil 5 und das Blendrahmenprofil 6 bilden gemeinsam eine Rahmen-Baugruppe.

Das jeweils rechtwinklige, umlaufende Flügelrahmenprofil 5 und Blendrahmenprofil 6 weisen jeweils ein umlaufendes Hohlkammerprofil 7 aus faserverstärktem Kunststoff, z.B. Polyamid, (bspw. PA6) mit mehreren Hohlkammern 8 auf, wobei die Hohlkammerprofile 7 der beiden Profile 5, 6 ein identisches Querschnittsprofil besitzen (s. Fig. 1, 2). Die im Querschnitt identischen Hohlkammerprofile 7 von Blendrahmenprofil 6 und Flügelrahmenprofil 5 sind im geschlossenen Zustand des Fensterflügels 2 um 180° gedreht zueinander angeordnet. Dies bedeutet konkret, dass vom Blendrahmenprofil 6 her gesehen somit das Hohlkammerprofil 7 des Flügelrahmenprofils 5 "auf dem Kopf" steht bzw. dies vom Flügelrahmenprofil 5 her gesehen entsprechend für das Hohlkammerprofil 7 des Blendrahmenprofils 6 gilt. Aufgrund des identischen Querschnitts können beide Hohlkammerprofile 7 mit ein und demselben Werkzeug, zum Beispiel Extrusions- oder Pultrusionswerkzeug hergestellt werden. Es ist erkennbar, dass jeweils mehrere Hohlkammern 8 im eingebauten Zustand der Rahmen-Baugruppe horizontal nebeneinander liegen. Ferner erstrecken sich die Hohlkammerprofile 7 jeweils über die gesamte Querschnittsbreite f der Rahmenprofile 5, 6. Somit bilden die Hohlkammerprofile 7 jeweils zumindest einen Teil der Innen- und Außenoberfläche sowohl des Flügelrahmenprofils 5 als auch des Blendrahmenprofils 6 (die dem Gebäudeinneren zugewandte Innenseite des Fensters 1 ist in den Fig. 1 und 2 mit I und die der Witterung ausgesetzte Außenseite mit A bezeichnet. Es ist somit auch hier erkennbar, dass sich der Fensterflügel 2 jeweils zur Innenseite I hin öffnet).

Die Hohlkammerprofile 7 weisen jeweils einen endlos faserverstärkten Kunststoff-Kern 9 auf, der mit einer nicht faserverstärkten Außenschicht 10 aus PVC oder Polyamid, z.B. PA6 coextrudiert ist. Die in Fig. 1 lediglich punktuell angedeuteten, unidirektional in Profilrichtung verlaufenden Endlosfasern 11 bestehen aus Glas und/oder Carbon und/oder Basalt und/oder Aramid. Der Gewichtsanteil der Verstärkungsfasern 11 über den gesamten Querschnitt der Hohlkammerprofile gesehen 7 beträgt im Ausführungsbeispiel mindestens 60 Gew.-%, z.B. mind. 70 Gew.-% bzw. in den Kunststoff-Kernen 9 mindestens 70 Gew.-%, z.B. mind. 75 Gew.-%. Die Herstellung der Hohlkammerprofile 7 erfolgt mit Hilfe reaktiver Pultrusion, wie sie in WO 2018/072878 grundsätzlich beschrieben ist. Die Außenschicht 10 umschließt den faserverstärkten Kunststoff-Kern 9 vollständig.

In den Fig. 1 und 2 ist jeweils an der Außenseite A des Blendrahmenprofils 6 eine Vorsatzschale 12 aus Aluminium befestigt, die die Außenoberfläche des Blendrahmenprofils 6 bedeckt. Ferner ist erkennbar, dass die ein identisches Querschnittsprofil besitzenden Hohlkammerprofile 7 einen im Wesentlichen S-förmigen Querschnitt aufweisen. Die Enden der S-Form dienen beim Flügelrahmenprofil 5 an der Außenseite A als Anschlag für die äußere Glasscheibe 4 und/oder an der Innenseite I als Anschlag am Blendrahmenprofil 6. Beim Blendrahmenprofil 6 hingegen dienen die Enden der S-Form in der Innenseite I als Verankerungselement im (nicht näher dargestellten) Mauerwerk des Gebäudes und/oder an der Außenseite A als Anschlag für das Flügelrahmenprofil 5.

Beide Hohlkammerprofile 7 mit identischem Querschnittsprofil weisen jeweils mehrere Ausnehmungen 13 mit einem Hinterschnitt zur Befestigung von Zusatzprofilen, beispielsweise elastischen Dichtungen (nicht dargestellt) auf. Am Flügelrahmenprofil 5 ist auf diese Weise ein ebenfalls eine Hohlkammer 14 aufweisendes Zusatzprofil 15 aus Kunststoff befestigt, das die Funktion einer die innerste Glasscheibe 4 einfassenden Glasleiste besitzt. Am Blendrahmenprofil 6 ist hingegen ein eine weitere Hohlkammer 16 aufweisendes Hohlkammer-Zusatzprofil 17 aus Aluminium befestigt, das als Klemmleiste zur Montage der Vorsatzschale 12 mittels (separaten oder auch an die Vorsatzschale 12 angeformten) Montageelementen 18 und gleichzeitig als zusätzliches Verankerungselement im Mauerwerk dient. Es ist erkennbar, dass die Ausnehmungen 13 zur Befestigung der Zusatzprofile 15, 17 jeweils im Querschnitt schwalbenschwanzförmig ausgebildet sind. In Fig. 2 sind diverse Abstände bemaßt, um einen Eindruck von der Dimensionierung der Rahmen-Baugruppe im Ausführungsbeispiel zu erhalten. Die vertikale Erstreckung eines Hohlkammerprofils 7 im Querschnitt beträgt a = 35 ÷ 75 mm, z.B. a = 45 ÷ 65 mm. Die größte Ausnehmung 13 der Hohlkammerprofile 7 weist eine Höhe b = 8 ÷ 15 mm, z.B. b = 10 ÷ 12 mm und/oder eine Breite c = 5 ÷ 10 mm, z.B. c = 6 ÷ 8 mm auf. Die Höhe der größten Hohlkammer 8 der Hohlkammerprofile 7 beträgt d = 10 ÷ 15 mm, z.B. d = 12 -- 14 mm und/oder die entsprechende Breite e = 20 ÷ 60 mm, z.B. e = 30 ÷ 50 mm. Die Rahmenbreite f der Hohlkammerprofile 7 ist vergleichsweise gering und beträgt maximal 85 mm, z.B. max. 80 mm, insbesondere max. 78 mm. Der freie Abstand g zur Einfassung der Glasscheiben 4 beträgt g = 35 ÷ 55 mm, z.B. g = 40 ÷ 50 mm.

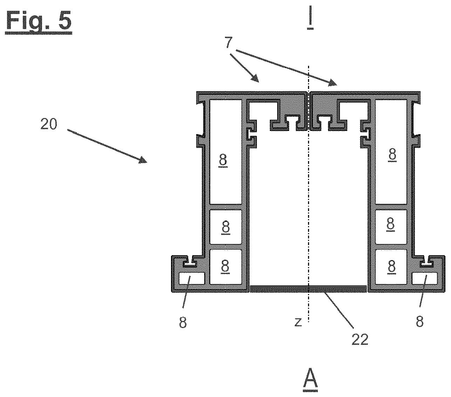

Die Fig. 3 und 4 zeigen Seitenansichten der in den Fig. 1 und 2 im Querschnitt dargestellten Rahmen-Baugruppen von der Außenseite A aus gesehen (Ansicht X bzw. Y). Beim erfindungsgemäßen Ausführungsbeispiel gemäß Fig. 4 weist das Blendrahmenprofil 6 zusätzlich ein Pfostenprofil 20 auf, welches die vom umlaufenden Blendrahmenprofil 6 aufgespannte Ebene in zwei kleinere, rechtwinklige Einheiten mit jeweils einem Fensterflügel 2 unterteilt (Fig. 2 zeigt den geschlossenen Flügel rechts). Das Pfostenprofil 20 weist mehrere Hohlkammerprofile 7 auf, deren Querschnitt wiederum identisch zum Querschnitt der Hohlkammerprofile 7 der Profile 5 und 6 ist. Anhand der ausschnittsweisen Darstellungen der Eckbereiche in den Fig. 3 und 4 ist ferner erkennbar, dass die Profile 5, 6 in den äußeren Eckbereichen auf Gehrung geschnitten und - ebenso wie zur Anbindung des Pfostenprofils 20 - mittels Eckverbindern 21 miteinander verbunden sind. Fig. 5 zeigt das in Fig. 4 dargestellte Pfostenprofil 20 in einer Querschnittsdarstellung. Es ist erkennbar, dass zur Bildung des Pfostenprofils 20 zwei Hohlkammerprofile 7 mit identischem Querschnitt verwendet werden, wobei diese spiegelbildlich zur Symmetrieachse z des Pfostenprofils 20 angeordnet sind. Zum Schließen des Pfostenprofils 20 an der Außenseite A ist ein plattenförmiges Profil 22 vorgesehen, das vergleichsweise einfach herzustellen ist. Somit kann auch ein substanzieller Bestandteil des Pfostenprofils 20 mit demselben Werkzeug hergestellt werden wie die Hohlkammerprofile 7 des Blendrahmenprofils 6 und des Flügelrahmenprofils 5.

Die erfindungsgemäße Rahmen-Baugruppe kommt insbesondere bei Fenstern oder Türen mit großen Abmessungen, beispielsweise einer Höhe H von mindestens 1 m, insbesondere mindestens 1,5 m, z.B. mindestens 2 m und/oder einer Breite B von mindestens 2 m, insbesondere mindestens 3 m, zum Beispiel mindestens 4 m zum Einsatz (s. Fig. 3, 4).

## Patentansprüche

1. Rahmen-Baugruppe für eine Tür oder ein Fenster (1) mit
- mindestens einem, zumindest ein flächiges Füllungselement, vorzugsweise mindestens eine Glasscheibe (4) einfassenden, umlaufenden Flügelrahmenprofil (5) und
- einem im geschlossenen Zustand das Flügelrahmenprofil (5) einfassenden, ebenfalls umlaufenden Blendrahmenprofil (6),
- wobei die Rahmenprofile (5, 6) vorzugsweise faserverstärkten Kunststoff enthalten, und
- wobei das Flügelrahmenprofil (5) und das Blendrahmenprofil (6) jeweils mindestens ein umlaufendes, mindestens eine Hohlkammer (7) aufweisendes Hohlkammerprofil (7) umfassen, die ein identisches Querschnittsprofil besitzen,
**dadurch gekennzeichnet, dass** das Blendrahmenprofil (6) zusätzlich mindestens ein Pfostenprofil (20) aufweist, welches die vom umlaufenden Blendrahmenprofil (6) aufgespannte Ebene unterteilt und dass das Pfostenprofil (20) ebenfalls zwei spiegelbildlich zueinander angeordnete Hohlkammerprofile (7) mit identischem Querschnittsprofil aufweist.

2. Rahmen-Baugruppe nach Anspruch 1, **dadurch gekennzeichnet, dass** die Hohlkammerprofile (7) jeweils mehrere Hohlkammern (8) aufweisen.

3. Rahmen-Baugruppe nach Anspruch 1 oder 2, **dadurch gekennzeichnet, dass** sich die Hohlkammerprofile (7) jeweils über die gesamte Querschnittsbreite (f) der Rahmenprofile (5, 6) erstrecken.

4. Rahmen-Baugruppe nach einem der Ansprüche 1 bis 3, **dadurch gekennzeichnet, dass** die Hohlkammerprofile (7) endlos faserverstärkten Kunststoff enthalten.

5. Rahmen-Baugruppe nach einem der Ansprüche 1 bis 4, **dadurch gekennzeichnet, dass** die Hohlkammerprofile (7) einen faserverstärkten Kunststoff-Kern (9) aufweisen, der mit einer Außenschicht (10) versehen, vorzugsweise coextrudiert ist.

6. Rahmen-Baugruppe nach Anspruch 5, **dadurch gekennzeichnet, dass** die Außenschicht (10) den faserverstärkten Kunststoff-Kern (9) zu mehr als 90 %, vorzugsweise vollständig umschließt.

7. Rahmen-Baugruppe nach einem der Ansprüche 1 bis 6, **dadurch gekennzeichnet, dass** an der Außenseite (A) des Blendrahmenprofils (6) mindestens eine metallische Vorsatzschale (12) befestigt ist.

8. Rahmen-Baugruppe nach einem der Ansprüche 1 bis 7, **dadurch gekennzeichnet, dass** die Hohlkammerprofile (7) mittels reaktiver Pultrusion hergestellt sind.

9. Rahmen-Baugruppe nach einem der Ansprüche 1 bis 8, **dadurch gekennzeichnet, dass** die Hohlkammerprofile (7) eine im Wesentlichen S-förmigen Querschnitt aufweist.

10. Rahmen-Baugruppe nach einem der Ansprüche 1 bis 9, **dadurch gekennzeichnet, dass** die Hohlkammerprofile (7) jeweils zumindest eine Ausnehmung (13) mit einem Hinterschnitt zur Befestigung eines, vorzugsweise eine Hohlkammer (14, 16) aufweisenden Zusatzprofils (15, 17) aufweisen.

11. Rahmen-Baugruppe nach einem der Ansprüche 1 bis 10, **dadurch gekennzeichnet, dass** die im Querschnitt identischen Hohlkammerprofile (7) von Blendrahmenprofil (6) und Flügelrahmenprofil (5) im geschlossenen Zustand um 180° gedreht zueinander angeordnet sind.

## Claims

1. Frame assembly for a door or a window (1), with
- at least one circumambient sash frame profile (5) encompassing at least one flat infill element, preferably at least one pane of glass (4), and
- a likewise circumambient door/window frame profile (6) which in the closed state encompasses the sash frame profile (5),
- wherein the frame profiles (5, 6) preferably contain fibre-reinforced plastics material, and
- wherein the sash frame profile (5) and the door/window frame profile (6) each comprise at least one circumambient hollow-chamber profile (7) having at least one hollow chamber (7), which hollow-chamber profiles have an identical cross-sectional profile,
**characterised in that** the door/window frame profile (6) additionally has at least one upright profile (20) which subdivides the plane spanned by the circumambient door/window frame profile (6), and **in that** the upright profile (20) likewise has two hollow-chamber profiles (7) with an identical cross-sectional profile which are arranged in a mirror image to each other.

2. Frame assembly according to claim 1, **characterised in that** the hollow-chamber profiles (7) each have a plurality of hollow chambers (8).

3. Frame assembly according to claim 1 or 2, **characterised in that** the hollow-chamber profiles (7) each extend over the entire cross-sectional width (f) of the frame profiles (5, 6).

4. Frame assembly according to one of claims 1 to 3, **characterised in that** the hollow-chamber profiles (7) contain endless fibre-reinforced plastics material.

5. Frame assembly according to one of claims 1 to 4, **characterised in that** the hollow-chamber profiles (7) have a fibre-reinforced plastics-material core (9) which is provided, preferably coextruded, with an outer layer (10).

6. Frame assembly according to claim 5, **characterised in that** the outer layer (10) encloses more than 90 % of the fibre-reinforced plastics-material core (9), preferably encloses it completely.

7. Frame assembly according to one of claims 1 to 6, **characterised in that** at least one metallic facing (12) is fastened to the outside (A) of the door/window frame profile (6).

8. Frame assembly according to one of claims 1 to 7, **characterised in that** the hollow-chamber profiles (7) are produced by means of reactive pultrusion.

9. Frame assembly according to one of claims 1 to 8, **characterised in that** the hollow-chamber profiles (7) have a substantially S-shaped cross-section.

10. Frame assembly according to one of claims 1 to 9, **characterised in that** the hollow-chamber profiles (7) each comprise at least one recess (13) with an undercut for fastening an additional profile (15, 17), preferably having a hollow chamber (14, 16).

11. Frame assembly according to one of claims 1 to 10, **characterised in that** the hollow-chamber profiles (7), which are of identical cross-section, of the door/window frame profile (6) and sash frame profile (5) in the closed state are arranged turned by 180° relative to each other.

## Revendications

1. Module de cadre pour une porte ou une fenêtre (1) avec
- au moins un profilé de cadre de battant (5) entourant au moins un élément de remplissage plat, encadrant de préférence au moins une vitre (4), et
- un profilé de cadre de dormant (6) encadrant, entourant également dans l'état fermé le profilé de cadre de battant (5),
- dans lequel les profils de cadre (5, 6) contiennent de préférence une matière plastique renforcée par des fibres, et
- dans lequel le profilé de cadre de battant (5) et le profilé de cadre de dormant (6) comprennent respectivement au moins un profilé de chambre creuse (7) périphérique présentant au moins une chambre creuse (7), qui possèdent un profilé de section transversale identique,
**caractérisé en ce que** le profilé de cadre de dormant (6) présente en supplément au moins un profilé de montant (20), lequel divise le plan formé par le profilé de cadre de dormant (6) périphérique, et que le profilé de montant (20) présente également deux profilés de chambre creuse (7) disposés en symétrie de miroir l'un par rapport à l'autre avec un profilé de section transversale identique.

2. Module de cadre selon la revendication 1, **caractérisé en ce que** les profilés de chambre creuse (7) présentent respectivement plusieurs chambres creuses (8).

3. Module de cadre selon la revendication 1 ou 2, **caractérisé en ce que** les profilés de chambre creuse (7) s'étendent respectivement sur la totalité de la largeur de section transversale (f) des profilés de cadre (5, 6).

4. Module de cadre selon l'une quelconque des revendications 1 à 3, **caractérisé en ce que** les profilés de chambre creuse (7) contiennent une matière plastique renforcée par des fibres sans fin.

5. Module de cadre selon l'une quelconque des revendications 1 à 4, **caractérisé en ce que** les profilés de chambre creuse (7) présentent une partie centrale en matière plastique (9) renforcée par des fibres, qui est pourvue d'une couche extérieure (10), de préférence est coextrudée.

6. Module de cadre selon la revendication 5, **caractérisé en ce que** la couche extérieure (10) renferme de préférence totalement la partie centrale en matière plastique (9) renforcée par des fibres à plus de 90 %.

7. Module de cadre selon l'une quelconque des revendications 1 à 6, **caractérisé en ce qu'**au moins une coque de parement (12) métallique est fixée sur le côté extérieur (A) du profilé de cadre de dormant (6).

8. Module de cadre selon l'une quelconque des revendications 1 à 7, **caractérisé en ce que** les profilés de chambre creuse (7) sont fabriqués au moyen d'une pultrusion réactive.

9. Module de cadre selon l'une quelconque des revendications 1 à 8, **caractérisée en ce que** les profilés de chambre creuse (7) présentent une section transversale sensiblement en forme de S.

10. Module de cadre selon l'une quelconque des revendications 1 à 9, **caractérisé en ce que** les profilés de chambre creuse (7) présentent respectivement au moins un évidement (13) avec une contre-dépouille pour fixer un profilé supplémentaire (15, 17) présentant de préférence une chambre creuse (14, 16).

11. Module de cadre selon l'une quelconque des revendications 1 à 10, **caractérisé en ce que** les profilés de chambre creuse (7) identiques dans la section transversale de profilé de cadre de dormant (6) et de profilé de cadre de battant (5) sont disposés dans l'état fermé de manière tournée les uns par rapport aux autres de 180°.
